# EUROPÄISCHE PATENTSCHRIFT

(11) **EP 1 237 772 B1**
(45) Veröffentlichungstag und Bekanntmachung des Hinweises auf die Patenterteilung: **14.04.2004**
(21) Anmeldenummer: 00987070.0
(22) Anmeldetag: 02.11.2000
(51) Int. Cl.: B61D 15/06, B61G 11/16

(54) **EINRICHTUNG FÜR DEN ENERGIEVERZEHR BEI EINEM SCHIENENFAHRZEUG**
ENERGY ABSORPTION DEVICE FOR A RAIL VEHICLE
DISPOSITIF D'ABSORPTION D'ENERGIE DESTINE A UN VEHICULE SUR RAILS

(30) Priorität: 06.11.1999 DE 19953395; 11.03.2000 EP 00105174
(43) Veröffentlichungstag der Anmeldung: 11.09.2002
(73) Patentinhaber: SIEMENS AKTIENGESELLSCHAFT, 80333 München (DE); SCHUNK SINTERMETALLTECHNIK GMBH, D-35452 Heuchelheim (DE); Honsel GmbH & Co. KG, 59872 Meschede (DE); HÜBNER GmbH, 34123 Kassel (DE)
(72) Erfinder: GERS, Horst, 59872 Meschede (DE); BAUMGÄRTNER, Frank, 35435 Wettenberg (DE); GEYER, Karl-Eberhard, 40591 Düsseldorf (DE); KLINKERT, Rudi, 34131 Kassel (DE)
(74) Vertreter: Walther, Robert, Dipl.-Ing.
(86) Internationale Anmeldenummer: PCT/DE2000/003860
(87) Internationale Veröffentlichungsnummer: WO 2001/034447

(56) Entgegenhaltungen:
- EP-A- 0 888 946
- DE-A- 19 502 307
- DE-A- 19 918 535
- US-A- 2 251 347
- US-A- 4 973 358
- US-A- 5 611 568

## Beschreibung

Die vorliegende Erfindung betrifft eine Einrichtung für den Energieverzehr bei einem Schienenfahrzeug, insbesondere des Nahverkehrs, wobei diese Einrichtung ein Energieverzehrelement, das einen Metallschaumkern enthält, und ein der fahrzeugseitigen Befestigung dieses Energieverzehrelementes dienendes Bauteil aufweist, wobei die zu verzehrende Energie allein durch den nicht mit einer stützenden Struktur aus festem Werkstoff zusammenwirkenden Metallschaumkern aufgenommen wird.

Es ist bekannt, an den Enden von Schienenfahrzeugen Ehergieverzehreinrichtungen (Stoßpuffer) anzubringen, um Beschädigungen der Fahrzeug-Struktur zu vermeiden. Diese Einrichtungen sollen einen Teil der Aufprallenergie abbauen, die bei Zusammenstößen mit gleichartigen Fahrzeugen, mit Straßenfahrzeugen oder bei Fahrt gegen ein festes Hindernis auftritt. In der VDV-Schrift 152 "Empfehlungen für die Festigkeitsauslegung von Personenfahrzeugen nach BOStrab", Kapitel 4.2.6 "Beanspruchung bei Aufstoßvorgängen" sind Aufprallgeschwindigkeiten, Endkräfte und Kraft-Weg-Diagramme vorgegeben.

Bei bekannten Stoßpuffern besteht das Energieverzehrelement beispielsweise aus einem Vollgummikörper oder einem Stahlblechhohlkörper, wobei solche Elemente innerhalb eines gehäuseartigen Befestigungsbauteils angeordnet sind. Ein Nachteil der bisher eingesetzten Stoßpuffer besteht in der Tatsache, dass Ihre Energieaufnahmefähigkeit nur gering ist, so dass sie lediglich bei relativ geringen Geschwindigkeiten wirksam sein können. Ein weiterer Nachteil liegt darin, dass die Kraft-Weg-Funktion bisheriger Konstruktionen die Vorgaben der VDV-Schrift 152 nicht erfüllt. Es werden nämlich zu hohe Endkräfte für das Ansprechen der Stoßpuffer benötigt, die dann zu Schäden an der Fahrzeugstruktur führen. Außerdem findet kein kontinuierlicher Energieabbau nach Dreiecks- oder Rechtecksfunktion statt, so dass der Energieabbau. pro Zeiteinheit ungünstig verläuft. Ein dritter Nachteil besteht in der Tatsache, dass der Energieabbau nicht progressiv verläuft, so dass er bei kleineren Hindernissen nicht wirksam werden kann; insbesondere bei Kollisionen des Fahrzeuges mit Fußgängern sind Verletzungen nicht auszuschließen. Viertens wird als nachteilig angesehen, dass das Energieaufnahmevermögen nicht an das Fahrzeuggewicht angepasst werden kann; damit wirkten die Stoßpuffer bei kürzeren Fahrzeugen zu hart, während ihre Wirkung bei längeren Fahrzeugen nur für geringe Geschwindigkeiten vorhanden ist.

Aus der DE 197 21 608 A1 ist ein aus Aluminiumschaum hergestelltes energieabsorbierendes Element für den Einsatz.in Kraftfahrzeugen bekannt. Dieses energieabsorbierende Element ist relativ schmal und im Verhältnis dazu gesehen lang ausgebildet. Eine solche Art der Ausbildung des Elementes ist zur Energieabsorbierung bei Kraftfahrzeugen, insbesondere bei Personenfahrzeugen, bei denen bei Aufprall auf einen Gegenstand mit hoher Geschwindigkeit aber relativ geringer Masse zu rechnen ist, durchaus sinnvoll. Das heißt, dass durch diese Prallelemente längere Verformungswege bereitgestellt werden, die schlussendlich dafür sorgen, dass ein wesentlicher Teil der Energie durch diesen Formkörper im Falle des Zusammenpralles aufgenommen wird, und dort zu einer Energievernichtung führt, wodurch innerhalb bestimmter Geschwindigkeitsbereiche eine Verletzung der Person im Fahrzeug vermieden werden kann.

Aus der JP 08068463 ist ein energieabsorbierendes Element bekannt, das aus mehreren Schichten eines metallischen Schaumes mit unterschiedlicher Dichte besteht.

Aus der US-PS 2,251,347 ist ein energieverzehrendes Element für den Schienenverkehr beschrieben, jedoch ohne die Verwendung eines Metallschaumkernes. Darüber hinaus besteht die Einrichtung zum Energieverzehr gemäß der US-PS 2,251,347 aus einzelnen, über die Breite des Fahrzeugs verteilt angeordneten Pufferelementen.

Aus der DE 195 02 307 A1 ist des Weiteren ein energieabsorbierendes Deformationselement zum Schutz der Kraftfahrzeugkarosserie und: zum Einbau zwischen einem Stoßfänger und einem Längsträger bekannt. Das energieabsorbierende Deformationselement umfasst hierbei eine Füllung aus einem Aluminiumschaum als Energieabsorber.

Der Erfindung liegt daher die Aufgabe zugrunde, eine Einrichtung der gattungsgemäßen Art unter Berücksichtigung der Einbausituation und der Austauschbarkeit mit bisherigen Einrichtungen zu schaffen, die die Anforderungen hinsichtlich Energieaufnahme, Kraft-Weg-Diagramm, Energie-Zeit-Diagramm und Anpassbarkeit an das Fahrzeuggewicht erfüllt.

Diese Aufgabe wird erfindungsgemäß dadurch gelöst, dass der Metallschaumkern eine quer zur Richtung der eingeleiteten Energie verlaufende Baubreite aufweist, die größer ist als seine Bauhöhe, wobei zusätzlich der Dichtegradient so gewählt ist, dass der Schaumkem einen Wert aufweist, der ausreichend ist, um eine Kraft-Weg-Funktion gemäß VDV 152, Kap. 4.2.6 zu erreichen.

Vorteilhafte Ausgestaltungen der Erfindung sind in den Unteransprüchen angegeben.

Im Gegensatz zu bisherigen Stoßpuffern kann bei dem Energieverzehrelement nach der Erfindung durch gesteuerte Aufschäumung eines Metalls eine Struktur geschaffen werden, mit der die Forderungen der VDV-Schrift 152 erfüllbar sind. Vorteilhafterweise wird eine dem Energieverzehretement adäquate Form mit Metallschaum ausgefüllt, der entstehende Kern mit weichem, vorzugsweise gummiartigem Material ummantelt und mit entsprechenden Befestigungsbauteilen versehen.

Der Metallschaum ist hinsichtlich seiner inneren Struktur so beschaffen, dass sein Energieaufnahmevermögen an das Fahrzeuggewicht angepasst wird, dass er bei einer definierten Kraft mit der Verformung beginnt (Ansprechverhalten) und während der Verformung eine Maximalkraft nicht überschreitet. Außerdem gestattet die innere Struktur des Metallschaums, einen vorgegebenen Zeitverlauf der Verformung zu erreichen. Zusätzlich kann durch mechanische Nachbearbeitung des Schaumkörpers ein vorgegebenes Ansprechverhalten und eine vorgegebene Empfindlichkeit über die metallischen Eigenschaften hinaus gesteuert werden. Denkbar sind ebenfalls vorgegebene spezielle Eigenschaften hinsichtlich Kraft-Weg-Verhalten, Energieabsorption und Endkraft in verschiedenen Richtungen, z. B. bei Aufprall von der Seite.

Die Anpaßbarkeit des Energieverzehrelements an unterschiedliche Fahrzeuggewichte und unterschiedliche Vorgabekennlinien ist weiter durch die Anordnung von Schichten verschiedenartiger Metallschäume denkbar. Durch Variation von Schaumdichte und Schaumhautdichte ist ferner eine Einstellung verschiedener Eigenschaften möglich, beispielsweise hinsichtlich des Kraft-Weg-Verformungsverhaltens, der Festigkeit, der Dichte und der Umformbarkeit. Auch Schäume mit einem Dichtegradienten sind denkbar.

Eine bessere Herstellbarkeit und Anpaßbarkeit des Energieverzehrelements an unterschiedliche Fahrzeuggewichte und unterschiedliche Vorgabekennlinien ist außerdem durch die kombinierte Anordnung von Einzelschichtelementen in Form von Scheiben auf einer Grundplatte, vorzugsweise aus Metall, denkbar.

Im weiteren wird die Erfindung anhand von Ausführungsbeispielen näher beschrieben, die in der Zeichnung schematisch dargestellt sind.

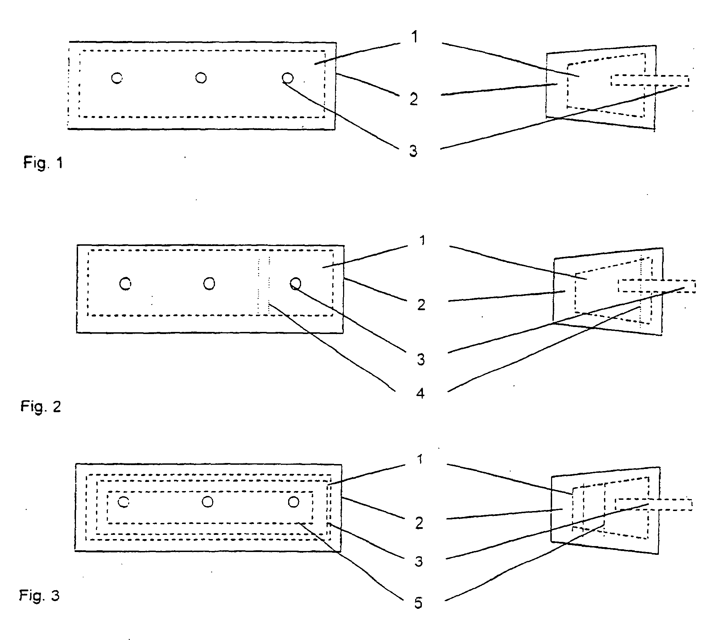

Fig. 1 zeigt den Grundaufbau eines Energieverzehrelements mit einem Metallschaumkern 1 und einem Befestigungselement 3, wobei der Metallschaumkern 1 von einer Umhüllung 2 umgeben ist.
Fig. 2 zeigt eine Ausbildung des Energieverzehrelements, bei der der Metallschaumkern 1 durch mechanische Nachbearbeitung erzeugte Ausfräsungen 4 aufweist, um bestimmte Eigenschaften hinsichtlich der Energieaufnahme zu erzielen.
Fig. 3 zeigt eine Ausführungsform des Energieverzehrelements, bei der der Metallschaumkern 1 aus Schichten 5 verschiedenartiger Schaumstrukturen besteht.

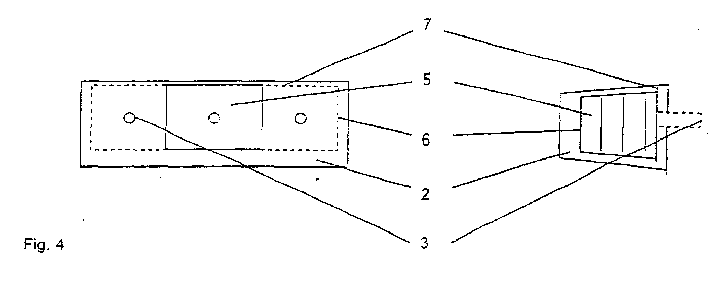

Fig. 4 zeigt eine weitere Gestaltung des Energieverzehrelements, bei der die Metallschaumschichten 5 von einem Hohlkörper 6 umgeben sind, der bevorzugt aus Kunststoff besteht. Die Metallschaumschichten 5 sind auf einer vorzugsweise metallischen Grundplatte 7 angebracht.

### Liste der Bezugszeichen

- 1: Metallschaumkern
- 2: Umhüllung
- 3: Befestigungsbauteil
- 4: mechanische Bearbeitung (Ausfräsung)
- 5: Metallschaumschichten
- 6: Hohlkörper aus Kunststoff
- 7: Grundplatte aus Metall

## Patentansprüche

1. Einrichtung für den Energieverzehr bei einem Schienenfahrzeug, insbesondere des Nahverkehrs, wobei diese Einrichtung ein Energieverzehrelement, das einen Metallschaumkern (1) enthält, und ein der fahrzeugseitigen Befestigung dieses Energieverzehrelementes dienendes Bauteil (3) aufweist, wobei die zu verzehrende Energie allein durch den nicht mit einer stützenden Struktur aus festem Werkstoff zusammenwirkenden Metallschaumkern (1) aufgenommen wird,
**dadurch gekennzeichnet,**
**dass** der Metallschaumkern eine quer zur Richtung der eingeleiteten Energie verlaufende Baubreite aufweist, die größer ist als seine Bauhöhe, wobei zusätzlich der Dichtegradient so gewählt ist, dass der Schaumkern einen Wert aufweist, der ausreichend ist, um eine: Kraft-Weg-Funktion gemäß VDV 152, Kap. 4.2.6 zu erreichen.

2. Einrichtung nach Anspruch 1,
**dadurch gekennzeichnet,**
**dass** der Metallschaumkern (1) ein maximales Energieaufnahmevermögen aufweist.

3. Einrichtung nach einem der Ansprüche 1 und 2,
**dadurch gekennzeichnet,**
**dass** der Metallschaumkern (1) bei einer maximalen Endkraft mit der Verformung beginnt.

4. Einrichtung nach einem der Ansprüche 1 bis 3,
**dadurch gekennzeichnet,**
**dass** der Metallschaumkem (1) eine spezielle Energie-Zeit-Funktion aufweist.

5. Einrichtung nach einem der Ansprüche 1 bis 4,
**dadurch gekennzeichnet,**
**dass** der Metallschaumkern (1) nach seiner Herstellung vorzugsweise auf mechanischem Wege so strukturiert wird, dass durch diese Strukturierung zumindest eine der in den Ansprüche 2 bis 4 genannten speziellen Eigenschaften erreichbar ist.

6. Einrichtung nach einem der Ansprüche 1 bis 5,
**dadurch gekennzeichnet,**
**dass** der Metallschaumkern (1) aus mehreren Schichten - auch verschieden strukturierter - Metallschäume besteht, um damit zumindest eine der in den Ansprüchen 2 bis 4 genannten speziellen Eigenschaften zu erreichen.

7. Einrichtung nach einem der Ansprüche 1 bis 6,
**dadurch gekennzeichnet,**
**dass** der Metallschaumkem (1) bei seiner Herstellung so strukturiert wird, dass er zumindest eine der in den Ansprüchen 2 bis 4 genannten speziellen Eigenschaften in verschiedenen Richtungen aufweist.

8. Einrichtung nach einem der Ansprüche 1 bis 6,
**dadurch gekennzeichnet,**
**dass** der Metallschaumkern (1) nach seiner Herstellung vorzugsweise mechanisch so strukturiert wird, dass er zumindest eine der in den Ansprüchen 2 bis 4 genannten speziellen Eigenschaften in verschiedenen Richtungen aufweist.

9. Einrichtung nach einem der Ansprüche 1 bis 8,
**dadurch gekennzeichnet,**
**dass** wenigstens ein Befestigungsbauteil (3) beim Schäumen direkt eingebracht wird.

10. Einrichtung nach einem der Ansprüche 1 bis 8,
**dadurch gekennzeichnet,**
**dass** wenigstens ein Befestigungsbauteil (3) nach dem Schäumen nachträglich angebracht wird.

11. Einrichtung nach einem der Ansprüche 1 bis 10,
**dadurch gekennzeichnet,**
**dass** wenigstens ein Befestigungsbauteil (3) nachträglich durch Umspritzen des Metallschaumkernes (1) nach dem Schäumen angebracht wird.

12. Einrichtung nach einem der Ansprüche 1 bis 11,
**dadurch gekennzeichnet,**
**dass** der Metallschaumkern (1) bei seiner Herstellung so strukturiert wird, dass er spezielle Dichtegradienten hinsichtlich der Ansprüche 2 bis 4 aufweist.

13. Einrichtung nach einem der Ansprüche 1 bis 11,
**dadurch gekennzeichnet,**
**dass** der Metallschaumkern (1) von einer Umhüllung (2) umgeben ist, wobei die Umhüllung (2) mittels Sollbruchstellen bzw. Solleinreißstellen so strukturiert ist, dass sie den Verformungsprozess des Metallschaumkerns (1) nicht behindert oder verzögert.

14. Einrichtung nach einem der Ansprüche 1 bis 11,
**dadurch gekennzeichnet,**
**dass** der Metallschaumkern (1) oderdie Metallschaumschichten (5) auf einer Grundplatte (7), vorzugsweise aus Metall, angebracht sind.

15. Einrichtung nach einem der Ansprüche 1 bis 11,
**dadurch gekennzeichnet,**
**dass** ein Hohlkörper (6), vorzugsweise aus Kunststoff, verwendet wird, der den Metallschaumkern (1) oder die Metallschaumschichten (5) zur Gewichtseinsparung der Umhüllung (2) weiträumig umgeben kann.

## Claims

1. A system for energy absorption on a railcar, more specifically a suburban traffic railcar, said system having an energy absorption element that contains a metal foam core (1) and a member (3) for securing said energy absorption element on the railcar, the energy to be absorbed being received by the metal foam core (1) only, which does not cooperate with a supporting structure of firm material,
**characterized in that**
the metal foam core has an overall width that is oriented transversely to the introduced energy and is greater than its overall height, the density gradient being additionally chosen so that the foam core has a value sufficient to achieve a force-displacement function according to VDV (Association of German Transport Enterprises) 152, Chap 4.2.6.

2. The system according to claim 1,
**characterized in that**
the metal foam core (1) has a maximal energy absorption ability.

3. The system according to one of the claims 1 and 2,
**characterized in that**
the metal foam core (1) begins to deform at a maximal final force.

4. The system according to one of the claims 1 through 3,
**characterized in that**
the metal foam core (1) has a special energy-time function.

5. The system according to one of the claims 1 through 4,
**characterized in that**,
after manufacturing, the metal foam core (1) is preferably mechanically structured so that one at least of the special properties mentioned in the claims 2 through 4 is attainable.

6. The system according to one of the claims 1 through 5,
**characterized in that**
the metal foam core (1) consists of several layers of metal foams, which may also have different structures, in order to attain at least one of the special properties mentioned in the claims 2 through 4.

7. The system according to one of the claims 1 through 6,
**characterized in that**,
during manufacturing, the metal foam core (1) is structured so that it exhibits one at least of the special properties mentioned in the claims 2 through 4 in different directions.

8. The system according to one of the claims 1 through 6,
**characterized in that**,
after manufacturing, the metal foam core (1) is preferably mechanically structured so that it exhibits one at least of the special properties mentioned in the claims 2 through 4 in different directions.

9. The system according to one of the claims 1 through 8,
**characterized in that**
at least one securing member (3) is inserted directly during foaming.

10. The system according to one of the claims 1 through 8,
**characterized in that**
at least one securing member (3) is subsequently attached after foaming.

11. The system according to one of the claims 1 through 10,
**characterized in that**
at least one securing member (3) is subsequently attached after foaming by injection moulding the metal foam core (1).

12. The system according to one of the claims 1 through 11,
**characterized in that**,
during manufacturing, the metal foam core (1) is structured so that it exhibits special density gradients with regard to claims 2 through 4.

13. The system according to one of the claims 1 through 11,
**characterized in that**
the metal foam core (1) is surrounded by a shroud (2), said shroud (2) being structured by means of score lines for breaking and tearing respectively in order not to hinder or delay the deformation process of the metal foam core (1).

14. The system according to one of the claims 1 through 11,
**characterized in that**
the metal foam core (1) or the metal foam layers (5) are mounted on a base plate (7), preferably made of metal.

15. The system according to one of the claims 1 through 11,
**characterized in that**
a hollow body (6) is used, which is preferably made of plastic material and is capable of surrounding at a distance the metal foam core (1) or the metal foam layers (5) to save the weight of the shroud (2).

## Revendications

1. Organe absorbeur d'énergie pour véhicule ferroviaire, notamment pour le transport ferroviaire de banlieue, ledit organe comportant un élément absorbeur d'énergie contenant un noyau en mousse métallique (1) et une pièce (3) servant à fixer ledit élément absorbeur d'énergie sur le véhicule, l'énergie destinée à être absorbée n'étant reçue que par le noyau en mousse métallique (1) qui ne coopère pas avec une structure support réalisée en un matériau solide,
**caractérisé en ce que**
le noyau en mousse métallique comporte un encombrement en largeur, c'est-à-dire selon une direction transversale par rapport à l'énergie entrante, qui est supérieur à son encombrement en hauteur, le gradient de densité étant de plus choisi de sorte que le noyau en mousse ait une valeur suffisante pour obtenir une fonction force-déplacement conforme au document VDV 152, chap. 4.2.6.

2. Organe selon la revendication 1,
**caractérisé en ce que**
le noyau en mousse métallique (1) possède une capacité d'absorption d'énergie maximale.

3. Organe selon l'une quelconque des revendications 1 et 2,
**caractérisé en ce que**
le noyau en mousse métallique (1) commence à se déformer à partir d'une force finale maximale.

4. Organe selon l'une quelconque des revendications 1 à 3,
**caractérisé en ce que**
le noyau en mousse métallique (1) possède une fonction énergie-temps spéciale.

5. Organe selon l'une quelconque des revendications 1 à 4,
**caractérisé en ce que**
le noyau en mousse métallique (1), une fois fabriqué, est de préférence structuré mécaniquement de manière à obtenir au moins une des propriétés spéciales mentionnées dans les revendications 2 à 4.

6. Organe selon l'une quelconque des revendications 1 à 5,
**caractérisé en ce que**
le noyau en mousse métallique (1) est constitué de plusieurs couches de mousses métalliques, qui peuvent aussi avoir des structures différentes, permettant d'obtenir au moins une des propriétés spéciales mentionnées dans les revendications 2 à 4.

7. Organe selon l'une quelconque des revendications 1 à 6,
**caractérisé en ce que**,
lors de sa fabrication, le noyau en mousse métallique (1) est structuré de manière à posséder au moins une des propriétés spéciales mentionnées dans les revendications 2 à 4 dans différentes directions.

8. Organe selon l'une quelconque des revendications 1 à 6,
**caractérisé en ce que**,
le noyau en mousse métallique (1), une fois fabriqué, est de préférence structuré mécaniquement de manière à posséder au moins une des propriétés spéciales mentionnées dans les revendications 2 à 4 dans différentes directions.

9. Organe selon l'une quelconque des revendications 1 à 8,
**caractérisé en ce qu'**
au moins une pièce de fixation (3) est introduite directement pendant le moussage.

10. Organe selon l'une quelconque des revendications 1 à 8,
**caractérisé en ce qu'**
au moins une pièce de fixation (3) est attachée ultérieurement, après le moussage.

11. Organe selon l'une quelconque des revendications 1 à 10,
**caractérisé en ce qu'**
au moins une pièce de fixation (3) est attachée ultérieurement, après le moussage, par surmoulage du noyau en mousse métallique (1).

12. Organe selon l'une quelconque des revendications 1 à 11,
**caractérisé en ce que**,
lors de sa fabrication, le noyau en mousse métallique (1) est structuré de manière à avoir des gradients de densité spéciaux en référence aux revendications 2 à 4.

13. Organe selon l'une quelconque des revendications 1 à 11,
**caractérisé en ce que**
le noyau en mousse métallique (1) est entouré d'une enveloppe (2), ladite enveloppe (2) étant structurée au moyen d'amorces de rupture ou de déchirure de manière à ne pas entraver ou retarder le processus de déformation du noyau en mousse métallique (1).

14. Organe selon l'une quelconque des revendications 1 à 11,
**caractérisé en ce que**
le noyau en mousse métallique (1) ou les couches de mousse métallique (5) sont fixés sur une plaque de base (7), de préférence réalisée en métal.

15. Organe selon l'une quelconque des revendications 1 à 11,
**caractérisé en ce qu'**
on utilise un corps creux (6), de préférence en matière plastique, qui peut entourer le noyau en mousse métallique (1) ou les couches de mousse métallique (5) à distance pour économiser le poids de l'enveloppe (2).
